# EUROPÄISCHE PATENTANMELDUNG

(11) **EP 4 296 909 A1**
(43) Veröffentlichungstag der Anmeldung: **27.12.2023**
(21) Anmeldenummer: 22180466.9
(22) Anmeldetag: 22.06.2022
(51) Int. Cl.: G06N 20/00, G06N 3/00, G06N 3/02

(54) **INDIVIDUELLE TESTMODELLE FÜR GENERALISIERTE MASCHINELLE LERNMODELLE**

(71) Anmelder: Siemens Aktiengesellschaft, 80333 München (DE)
(72) Erfinder: Phan, Thomy, 81369 München (DE); Schmid, Reiner, 80538 München (DE)
(74) Vertreter: Siemens Patent Attorneys

(57) **Zusammenfassung**

Die Erfindung betrifft eine generalisierte maschinelle Lernkomponente (ML) für mindestens zwei technische Systeme (AK), aufweisend:
- Eine erste Empfangseinheit, ausgebildet Performance-Bewertungen bezüglich einem ersten generalisierten maschinellen Lernmodel von den mindestens zwei technischen Systemen zu empfangen (4),
- eine Testanpassungseinheit (TA), ausgebildet basierend auf den Performance-Bewertungen (4) mindestens zwei maschinelle Testmodelle (TM) zu erstellen, wobei den mindestens zwei technischen Systemen (AK) jeweils ein maschinelles Testmodell (TM) zugeordnet ist,
- eine Testeinheit, ausgebildet durch die mindestens zwei maschinellen Testmodelle (TM) jeweils ein Testergebnis bezüglich mindestens einem zweiten generalisierten Lernmodel zu erzeugen, und
- eine Sendeeinheit, ausgebildet, jeweils in Abhängigkeit des Testergebnisses des jeweils zugeordneten maschinellen Testmodells (TM), an die mindestens zwei technischen Systeme (AK) das zweite generalisierte maschinelle Lernmodel zu senden (3).

Außerdem betrifft die Erfindung ein zugehöriges Verfahren, Computerprogrammprodukt und computerlesbares Medium.

## Beschreibung

### HINTERGRUND DER ERFINDUNG

### Gebiet der Erfindung

Die vorliegende Erfindung betrifft eine generalisierte maschinelle Lernkomponente für mindestens zwei technische Systeme. Die Erfindung betrifft außerdem ein zugehöriges Verfahren, Computerprogrammprodukt und computerlesbares Medium.

### Beschreibung des Stands der Technik

Intelligente Systeme, insbesondere autonome Produktionsanlagen oder Systeme zur automatischen medizinischen Diagnose, werden in der Regel in verschiedenen Umgebungen und Anwendungskontexten eingesetzt.

In allen Umgebungen werden gleichartige Aufgaben, insbesondere eine Erkennung eines Objektes oder eine Regelung eines Steuerkreises in verschiedenen Anwendungskontexten (AK) mit u.U. sehr heterogenen Rahmenbedingungen, insbesondere unterschiedliche Infrastruktur wie Kommunikationstopologien, Datenspeicherung, Komponentenverteilung, gelöst.

Beim Einsatz von lernenden Systemkomponenten, insbesondere die automatische Steuerung von Aktoren oder die Objekterkennung in Sensordaten, welche mittels maschinellen Lernens (ML) realisiert sind, werden ausreichende Datenmengen von möglichst allen Anwendungskontexten benötigt, um erfolgreich deployed und installiert zu werden.

Die ML-Komponente muss dabei laufend aktualisiert bzw. erneut trainiert werden, falls sich lokale Daten ändern oder wenn neue Anwendungskontexte hinzukommen.

Federated Learning (FL) ist ein datenschutzkonformes Paradigma, mit dem generalisierende ML-Komponenten für verschiedene AKs realisiert werden können, ohne dass ggf. vertrauliche Daten, insbesondere geheime Produktionspläne oder Patientendaten, übertragen und zentral gespeichert werden müssen.

Aktuell wird in Federated Learning (FL) eine Aggregation der lokalen Trainingsfortschritte von verschiedenen Anwendungskontexten zentral an einem Federated Learning Server getestet und ein Update des maschinellen Lernmodels an alle Anwendungskontexte übertragen, wenn der zentrale Test positiv ausfällt, d.h. wenn das Update zu einer Perfomance-Verbesserung führt. Somit kann sichergestellt werden, dass globale Performance-Kriterien, welche für alle AKs gelten, geprüft und erfüllt werden können.

Im Falle von Änderungen oder einzubeziehenden Unterscheiden zwischen Anwendungskontexten, müssen die zentralen Testdaten und globalen Performance-Kriterien manuell durch Domänenexperten angepasst werden.

Die Aufgabe der Erfindung besteht darin, eine Lösung für eine effizientere Durchführung von Federated Learning bei gleichzeitig verbesserter Performance bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft eine generalisierte maschinelle Lernkomponente für mindestens zwei technische Systeme, aufweisend:
- Eine erste Empfangseinheit, ausgebildet Performance-Bewertungen bezüglich einem ersten generalisierten maschinellen Lernmodel von den mindestens zwei technischen Systemen zu empfangen,
- eine Testanpassungseinheit, ausgebildet basierend auf den Performance-Bewertungen mindestens zwei maschinelle Testmodelle zu erstellen, wobei den mindestens zwei technischen Systemen jeweils ein maschinelles Testmodell zugeordnet ist,
- eine Testeinheit, ausgebildet durch die mindestens zwei maschinellen Testmodelle jeweils ein Testergebnis bezüglich mindestens einem zweiten generalisierten Lernmodel zu erzeugen, und
- Eine Sendeeinheit, ausgebildet, jeweils in Abhängigkeit des Testergebnisses des jeweils zugeordneten maschinellen Testmodells, an die mindestens zwei technischen Systeme das zweite generalisierte maschinelle Lernmodel zu senden.

Die Sendeeinheit ist somit ausgebildet, individuell für jedes der technischen Systeme, auch als Anwendungskontexte bezeichenbar, zu entscheiden oder eine Entscheidung zu empfangen, ob das zweite generalisierte maschinelle Lernmodell gesendet werden soll.

Das zweite generalisierte maschinelle Lernmodell ist für jedes technische System identisch. Dies trifft auch auf das erste generalisierte maschinelle Lernmodell zu.

Die mindestens zwei maschinellen Testmodelle unterscheiden sich hingegen, da sie individuell für die technischen Systeme erstellt werden. Auch die mindestens zwei technischen Systeme weisen Unterschiede aus. Somit sind auch die Testergebnisse, welche von den mindestens zwei maschinellen Testmodellen erzeugt werden, individuell und in den meisten Fällen unterschiedlich. Je nach Testergebnis für ein technisches System, erhält dieses technische System das zweite generalisierte Modell oder erhält es nicht.

Nach einer Ausführungsform der Erfindung existiert mindestens ein zweites generalisierts Lernmodel. Es können weitere Performance-Bewertungen bezüglich dem zweiten generalisierten maschinellen Lernmodel empfangen werden, darauf basierend weiterer Testmodelle angepasst oder erzeugt werden, Testergebnisse bezüglich weiteren Lernmodellen erzeugt werden und die weiteren Lernmodelle in Abhängigkeit der weiteren Testergebnisse gesendet werden.

Es wird somit ein adaptiver Testmechanismus, umgesetzt durch die Testeinheit, eingeführt, welcher individuell für jeden Anwendungskontext (AK) eine Testanpassung gemäß der lokalen Performance-Stabilität durchführt indem spezifische Testmodelle, auch als Testfälle bezeichenbar, generiert werden, insbesondere eine gezielte Auswahl von Testdaten, um die Aggregation gemäß dem Federated Learning zu testen.

Die Performance-Bewertungen können auch als Perfomance-Kenngrößen, Performance-Stabilität, Feedbacksignale und/oder als Rückmeldungen bezüglich dem Lernmodell bezeichnet werden.

Die Performance-Bewertungen sind insbesondere als numerische Feedbacksignale ausgebildet. Die Testanpassung wird durch numerische Feedbacksignale optimiert, welche von jedem Anwendungskontext ausgehen. Das numerische Feedbacksignal hat insbesondere Werte von -1 (Performance in Anwendungskontext reduziert), 0 (Performance in Anwendungskontext stabil) und 1 (Performance in Anwendungskontext verbessert) annehmen. Dabei hängt das eindimensionale Feedbacksignal von den individuellen Performance-Kriterien der Anwendungskontexte ab (z.B. die erforderliche Erkennungsgenauigkeit von Wetterverhältnissen oder Menschen je nach Anwendungskontext) und muss dem Server nicht offengelegt werden. Das bedeutet, dass jeder Anwendungskontext für seine Performance-Kriterien ein individuelles Feedbacksignal berechnet, welches auf -1, 0 oder 1 normiert und zum Server zusätzlich zu dem Trainingsfortschritt gesendet wird.

Ein Federated Learning Server kann allein basierend auf den normierten Signalen keine Rückschlüsse über die Art und die Anzahl der Performance-Kriterien ziehen, wodurch der Datenschutz weitgehend erhalten bleibt.

Alternativ können Feedbacksignale auch reelle Werte in einem eingeschränkten Wertebereich wie z.B. [-1, 1] annehmen. Wichtig ist nur, dass zwischen Performanceverbesserung und - verschlechterung numerisch deutlich unterschieden werden kann. Bei beliebigen reellen Werten kann die Testanpassung u.U. (in Abhängigkeit vom Optimierungsalgorithmus,) vereinfacht werden. Allerdings legt ein solcher Wertebereich mehr Informationen über die Anwendungskontexte offen, insbesondere zu welchem Grad sich bestimmte Anwendungskontexte verbessert bzw. verschlechtert haben.

Jeder Testoptimierungsprozess generiert Testfälle, insbesondere besondere Aufgabenverteilungen in Testproduktionsanlagen oder Bilder von Tumoren mit spezifischen Auflösungen oder Rauschen) basierend auf dem numerischen Feedbacksignal, welches maximiert werden soll. Dabei deutet ein negatives Feedbacksignal auf unzureichende Tests am Server hin, da die ursprüngliche Aggregation nicht mit dem betroffenen Anwendungskontext synchronisiert hätte werden sollen (und somit eine Anpassung der Testfälle erfordern), während ein nichtnegatives Feedbacksignal auf aktuelle Performance-Stabilität hinweist (in diesem Fall war die Testabdeckung ausreichend).

Der Testoptimierungsprozess ermittelt mithilfe des iterativen Austausches von Aggregation und Feedbacksignalen geeignete Testfälle, um zukünftige Feedbacksignale langfristig zu maximieren. Da jeder Anwendungskontext individuell und unabhängig von anderen Anwendungskontexten Feedbacksignale berechnet, kann sich jeder Testoptimierungsprozess auf die Testabdeckung eines bestimmten Anwendungskontextes konzentrieren und die Tests gezielt anpassen, ohne die konkreten Performance-Kriterien, Daten oder Rahmenbedingungen des AKs kennen zu müssen.

Im nächsten Schritt wird die Aggregation gemäß des Federated Learnings für jeden AK individuell getestet. Dazu wird die Aggregation mit allen generierten Testfällen für jeden AK getestet und anhand von allgemein bekannten und domänenabhängigen Kriterien (z.B. die Effizienz bei der Steuerung von Aktoren oder die Vorhersagegenauigkeit bei Objekterkennungsaufgaben) bewertet. Für den Einsatz von allgemein bekannten Kriterien ist ein Konsens zwischen AKs und Server erforderlich (z.B. die Erkennungsgenauigkeit wäre für die Objekterkennung ein allgemein bekanntes Performance-Kriterium, allerdings kann in bestimmten AKs zusätzlich eine hohe Konfidenz wichtig sein).

Für die Bewertung der Performance-Stabilität wird geprüft, ob sich die Performance gemäß diesen allgemein bekannten Kriterien im Vergleich zu früheren Tests verbessert oder verschlechtert hat. Dabei ist die konkret erreichte Performance am Server irrelevant, da der betroffene AK weitere Performance-Kriterien verwenden könnte, die dem Server nicht bekannt sind. Entscheidend sind nur die relative Verbesserung und Verschlechterung, um die Performance-Stabilität bezogen auf den AK (ohne weiteres Wissen) abschätzen zu können.

Falls die Aggregation für mindestens einen Testfall im Vergleich zu früheren Tests zu einer schlechteren Performance führt, wird die Synchronisation und das Senden des zweiten generalisierten Lernmodels zurückgehalten. Der betroffene AK erhält also keine neue Aggregation, da diese möglicherweise (temporär) zu einer Performanceminderung führen könnte. Andere AKs, deren individuelle Tests bestanden sind (d.h. die Performance sich verbessert oder nicht verändert), erhalten die Aggregation unabhängig davon.

Dadurch, dass alle AKs kontinuierlich ihre aktuellen Trainingsfortschritte (einschließlich der AKs, die zuvor keine Aggregation erhalten haben und somit auf ihrem ursprünglichen ML-Stand weitertrainieren) an den Server senden, wird die Aggregation laufend aktualisiert (und synchronisiert, sobald die aktuelle Aggregation alle entsprechenden Tests besteht). Somit tragen alle AKs zur Aktualisierung der Aggregation bei, wobei AKs mit besonders anspruchsvollen Testfällen, weniger oft synchronisiert werden und sich somit durch das lokale Training eher spezialisieren als durch eine globale Synchronisation generalisieren. Dies entspricht einer automatisierten Anpassung des FL-Systems an unterschiedliche AKs zur kontinuierlichen Sicherstellung der lokalen Performance-Stabilität. Weitere hinzukommenden AKs haben keinen Einfluss auf die Performance-Stabilität der anderen AKs, da diese vom FL Quality Gate separat getestet werden.

Zusammengefasst sieht die Erfindung den Einsatz eines zentralen FL Quality Gates am Server vor, welches die Aggregation aller Trainingsfortschritte der Anwendungskontexte (AKs) individuell für jeden AK testet. Da für jeden AK verschiedene Performance-Kriterien verwendet werden können, benötigt der Server individuelle Testfälle, um diese Kriterien abdecken können. Da die spezifischen Kriterien für den Server im Allgemeinen nicht bekannt sind, muss das FL Quality Gates alle individuellen Testfälle pro AK laufend über Feedbacksignale anpassen.

Nach dem aktuellen Stand der Technik können mit FL global generalisierende ML-Komponenten trainiert werden, die in verschiedenen, darunter auch neu hinzukommenden, AKs eingesetzt werden können. Durch die globale Optimierung der ML-Komponente ist bisher allerdings nicht sichergestellt, dass die Performance in allen bestehenden AKs stabil bleibt. Durch dezentrale Anpassungen und Änderungen in lokalen Trainingsdaten, können einzelne lokale Trainingsfortschritte (temporär) global negative Auswirkungen durch die Synchronisation haben, indem die betroffene ML-Komponente in einzelnen AKs für einen bestimmten Zeitraum nur noch mit eingeschränkter Performance einsetzbar ist, was von betroffenen Anwendern negativ wahrgenommen werden kann. Dieses Problem löst die Erfindung durch individuelle Tests basierend auf den Performance-Bewertungen der einzelnen Anwendungskontexte.

In einer Weiterbildung der Erfindung weist die generalisierte maschinelle Lernkomponente außerdem auf:
- eine zweite Empfangseinheit, ausgebildet mindestens einen lokalen Trainingsfortschritt von den mindestens zwei technischen Systemen zu empfangen, wobei der mindestens eine lokale Trainingsfortschritt auf einem Training des ersten generalisierten maschinellen Lernmodel basiert und
- eine Aggregationseinheit, ausgebildet das mindestens eine zweite generalisierte maschinelle Lernmodel durch eine Aggregation des mindestens einen lokalen Trainingsfortschritts zu erstellen.

Der mindestens eine lokale Trainingsfortschritt ist insbesondere als ein Parameter des ersten generalisierten Lernmodells, insbesondere eines neuronalen Netzes, ausgebildet und gibt Auskunft darüber, wie das Neuronale Netz auf gewisse Daten reagiert.

Es liegt somit bei jedem technischen System eine Instanz des ersten generalisierten Lernmodells vor. Lokal, bei den technischen Systemen, findet ein fortlaufendes Training des ersten generealisierten Lernmodels statt. Der sich aus diesem Training ergebende Trainingsfortschritt wird an die generalisierte maschinelle Lernkomponente gesendet und von dieser empfangen.

Die Trainingsfortschritte, insbesondere numerischen Gewichte eines neuronalen Netzes, werden insbesondere periodisch anstelle der gesamten Daten an die generalisierte maschinelle Lernkomponente, eine zentrale Stelle oder Server, übertragen und dort aggregiert.

Die Aggregation der einzelnen Trainingsfortschritte, welches ein generalisiertes Lernmodell bezogen auf alle AKs repräsentieren soll, wird anschließend an alle AKs übertragen, welche damit lokal weiterarbeiten und trainieren können. Die Schritte erfolgen periodisch zu bestimmten Zeitpunkten z.B. alle 10 Stunden. Dabei ist es möglich, dass nur eine Untermenge von AKs zu einem bestimmten Zeitpunkt, eine Aggregation anstößt.

Technisch lässt sich ein asynchron dezentrales Training realisieren, indem der Server die Aggregation und Synchronisation abwartet, bis Trainingsfortschritte von einer vorab definierten Mindestanzahl verschiedener AKs eingegangen ist (falls ein AK mehrere Trainingsfortschritte meldet, wird der aktuelle Fortschritt für die Aggregation herangezogen).

In einer weiteren Weiterbildung der Erfindung ist der mindestens eine lokale Trainingsfortschritt ausgebildet als:
- numerische Gewichte eines neuronalen Netzes und/oder
- Gradienten eines neuronalen Netzes.

In einer weiteren Weiterbildung der Erfindung ist wobei die zweite Empfangseinheit außerdem ausgebildet, den mindestens einen lokalen Trainingsfortschritte von den mindestens zwei technischen Systemen zu vorgegebenen Zeitpunkten abzufragen, auch als abzurufen bezeichenbar. In dieser Ausführungsform findet eine aktive Abfrage ausgehend von der generalisierten maschinellen Lernkomponente statt. Diese Abfrage findet zu vorgegebenen Zeitpunkten, insbesondere periodisch, in Intervalle, alle 10 Stunden und/oder zu bestimmten Ereignissen statt. Diese bestimmten Ereignisse ist insbesondere ausgebildet als: Wenn von einer vorab definierten Mindestanzahl verschiedener AKs der mindestens einen lokalen Trainingsfortschritt eingegangen ist. Falls ein AK mehrere Trainingsfortschritte meldet, wird dabei der aktuelle Fortschritt für die Aggregation herangezogen.

In einer weiteren Weiterbildung der Erfindung ist die Aggregationseinheit außerdem ausgebildet, das mindestens eine zweite generalisierte maschinelle Lernmodel durch ein Anpassen des ersten generalisierten maschinellen Lernmodels zu erstellen. Nach dieser Ausführungsform ist das erste generalisierte maschinelle Lernmodel eine Grundlage für die Erstellung des zweiten generalisierten maschinellen Lernmodels.

In einer weiteren Weiterbildung der Erfindung ist die generalisierte ausgebildet als:
- ein Server und/oder
- eine Cloud-Umgebung und/oder
- eine Recheneinheit.

In einer weiteren Weiterbildung der Erfindung sind die mindestens zwei technischen Systeme, auch als Anwendungskontexte bezeichenbar, ausgebildet als:
- autonome Produktionsanlagen und/oder
- Fertigungsanlagen und/oder
- Systeme zur medizinischen Diagnose und/oder
- industrielle Anlagen und/oder
- Energiekraftwerke und/oder
- Schienenverkehrsfahrzeuge und/oder
- Straßenverkehrsfahrzeuge und/oder
- automatische Steuerungen von Aktoren und/oder
- Objekterkennungseinheiten.

Die technischen Systeme, bzw. die Anwendungskontexte, weisen u.U. sehr heterogenen Rahmenbedingungen, insbesondere unterschiedliche Infrastruktur wie Kommunikationstopologien, Datenspeicherung und/oder Komponentenverteilung auf.

In einer weiteren Weiterbildung der Erfindung ist die Testanpassungseinheit außerdem ausgebildet, die maschinelle Testmodelle zu erstellen durch:
- einen Optimierungsalgorithmus und/oder
- einen Reinforcement Learning Algorithmus und/oder
- einen Multi-armed Bandits (MAB) Algorithmus.

Die maschinelle Testmodelle werden dabei für jeden AK durch einen eigenen, individuellen Testoptimierungsprozess erstellt.

In einer weiteren Weiterbildung der Erfindung ist die Testanpassungseinheit außerdem ausgebildet, basierend auf den Performance-Bewertungen die maschinellen Testmodelle zu erstellen, wodurch vorherige maschinelle Testmodelle angepasst werden. Nach dieser Ausführungsform bilden die vorherigen maschinellen Testmodelle die Grundlage für das Erstellen der maschinellen Testmodelle.

In einer weiteren Weiterbildung der Erfindung ist die erste Empfangseinheit außerdem ausgebildet, zweite Performance-Bewertungen bezüglich des mindestens einem zweiten generalisierten maschinellen Lernmodels von den mindestens zwei technischen Systemen zu empfangen. Nach dieser Ausführungsform findet ein iterativer Austausch zwischen den technischen Systemen und der generalisierte maschinelle Lernkomponente statt. Es werden kontinuierlich von den Anwendungskontexten Performance-Bewertungen und Trainingsfortschritte empfangen, darauf basierend werden kontinuierlich Testmodelle angepasst und generalisierte maschinelle Lernmodelle angepasst, getestet und gesendet.

In einer weiteren Weiterbildung der Erfindung ermöglicht die Performance-Bewertungen keine Rückschlüsse auf Trainingsdaten der mindestens zwei technischen Systeme. Die eigentlichen Trainingsdaten werden somit nicht ausgetauscht und sind der generalisierte maschinelle Lernkomponente auch zu keiner Zeit bekannt.

In einer weiteren Weiterbildung der Erfindung ermöglicht der mindestens eine lokale Trainingsfortschritt keine Rückschlüsse auf Trainingsdaten der mindestens zwei technischen Systeme. Die eigentlichen Trainingsdaten werden somit nicht ausgetauscht und sind der generalisierte maschinelle Lernkomponente auch zu keiner Zeit bekannt.

Die Erfindung umfasst außerdem ein Verfahren zum Senden eines zweiten generalisierten maschinellen Lernmodels, mit den Schritten:
- Ein Empfangen einer Performance-Bewertungen bezüglich einem ersten generalisierten maschinellen Lernmodel von mindestens zwei technischen Systemen,
- ein Erstellen von mindestens zwei maschinellen Testmodellen basierend auf den Performance-Bewertungen, wobei den mindestens zwei technischen Systemen jeweils ein maschinelles Testmodell zugeordnet ist,
- ein Erzeugen von jeweils einem Testergebnis bezüglich mindestens einem zweiten generalisierten Lernmodel durch die mindestens zwei maschinellen Testmodelle, und
- jeweils in Abhängigkeit des Testergebnisses des jeweils zugeordneten maschinellen Testmodells: Ein Senden des zweiten generalisierten maschinellen Lernmodel an die mindestens zwei technischen Systeme.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung bietet zusammengefast den Vorteil, dass keine detaillierten Kenntnisse über die Rahmenbedingungen oder Daten von einzelnen AKs, insbesondere geheime Produktionspläne oder Patientendaten, erforderlich sind, wodurch der Datenschutz gewährleistet wird. Dadurch entfällt der Managementaufwand zur Sicherstellung von Datensicherheit und Datenschutz beim Dienstleister. Durch das zentrale Testen kann der Server die Performance-Stabilität für jeden AK sicherstellen und verhindern, dass eine Synchronisation ungewollt zu einer (temporären) Minderung der Performance führt. Durch die automatische Testanpassung entfällt die Notwendigkeit von manuellen Testfalldefinition durch Domänenexperten.

Die Testanpassung basierend auf dem numerischen Feedback stellt sicher, dass die individuellen Testfälle für jeden AK ausreichen, um die jeweiligen Performance-Kriterien bestmöglich abzudecken. Die individuellen Tests prüfen für jeden AK, ob die Aggregation die Performance verschlechtern könnte. Falls ein individueller Test fehlschlägt, wird die Aggregation zurückgehalten und nicht mit dem betroffenen AK synchronisiert, womit eine (temporären) Minderung der Performance verhindert wird. Sowohl für die Testanpassung als auch die individuellen Tests, werden keine weiteren Daten als das numerische Feedback und die lokalen Trainingsfortschritte der AKs benötigt.

Durch die verbesserte Qualitätssicherung wird die Zufriedenheit und das Vertrauen aller Kunden bzw. Anwender zum Dienstleister verbessert, was sich positiv auf Reputation und Kundenakquisition des Dienstleisters auswirkt. Zusätzlich spart der Einsatz von Quality Gates im FL Kontext Kosten in Bezug auf Domänenwissen für Testfalldefinitionen, Datensicherung und Datenschutz pro Kunden und skaliert mit der Anzahl der Kunden, da deren Anforderungen individuell und unabhängig voneinander getestet werden.

Bisherige FL Ansätze führen entweder keine Tests durch, oder verwenden eine statische Menge an zentralen Testfällen, welche manuell angepasst werden muss. Die Neuerungen des Quality Gate Ansatzes enthält zwei grundlegende Elemente: Testanpassung und individuelle Tests für jeden AK. Die Testanpassung erzeugt individuelle Testfälle für jeden AK basierend auf einem numerischen Feedbacksignal, welches Werte von -1, 0 und 1 annehmen kann. Die Testfälle werden mithilfe von (Boltzmann-) Multi-armed Bandits (MAB) erzeugt, wobei für jeden AK eine bestimmte Menge an MABs verwendet wird. Diese MABs sind spezielle Reinforcement Learning Algorithmen und in der Lage, mithilfe des numerischen Feedbacks gezielt Testfälle zu erlernen, welche die Performance optimiert (ohne die tatsächlichen Daten/Rahmenbedingungen der AKs zu kennen).

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: ein grundlegendes Schema von Federated Learning (FL) nach dem Stand der Technik und
- Fig. 2: ein grundlegendes Schema von Federated Learning (FL) nach der vorliegenden Erfindung.

### DETAILLIERTE BESCHREIBUNG DER ERFINDUNG

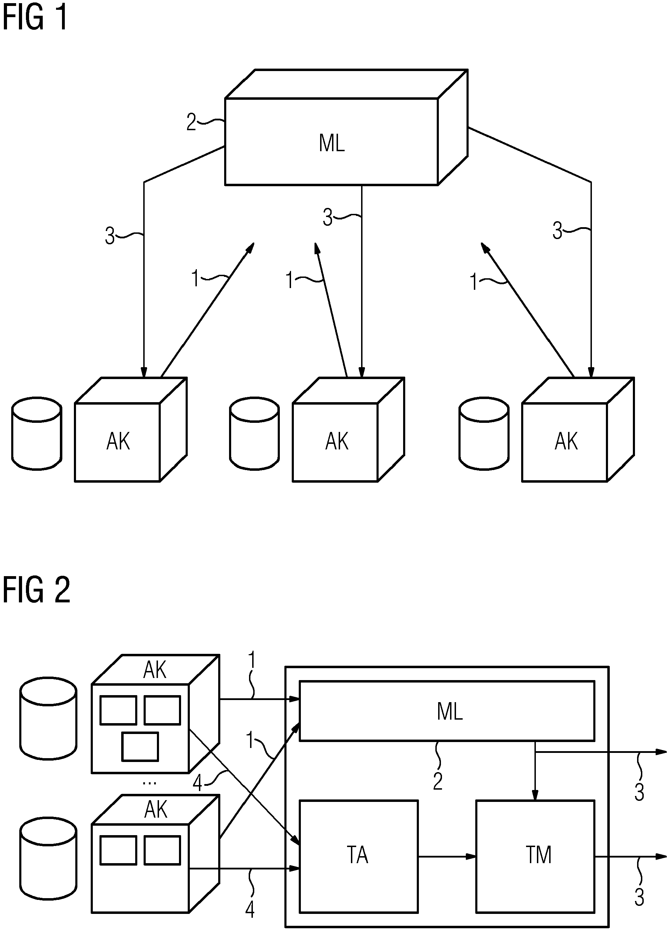

Fig. 1 zeigt ein grundlegendes Schema von Federated Learning nach dem Stand der Technik. Die ML-Komponente ML wird dezentral in verschiedenen Anwendungskontexten AK auf den entsprechenden lokalen Daten trainiert.

Die Trainingsfortschritte, i.d.R., die numerischen Gewichte eines neuronalen Netzes, werden periodisch anstelle der Daten an die ML-Komponente ML, eine zentrale Stelle ML oder Server ML, übertragen 1 und dort aggregiert 2.

Die Aggregation 2 der einzelnen Trainingsfortschritte, welches ein generalisiertes Modell bezogen auf alle Anwendungskontexte AKs repräsentieren soll, wird anschließend an alle Anwendungskontexte AKs übertragen 3, welche damit lokal weiterarbeiten und trainieren können. Die Schritte 1 - 3 erfolgen periodisch zu bestimmten Zeitpunkten z.B. alle 10 Stunden. Dabei ist es möglich, dass nur eine Untermenge von Anwendungskontexten AKs zu einem bestimmten Zeitpunkt, eine Aggregation 2 anstößt.

Technisch lässt sich ein asynchron dezentrales Training realisieren, indem der Server ML die Aggregation 2 und Synchronisation 3 abwartet, bis Trainingsfortschritte von einer vorab definierten Mindestanzahl verschiedener Anwendungskontexten AKs eingegangen 1 ist. Falls ein Anwendungskontexte AK mehrere Trainingsfortschritte meldet 1, wird der aktuelle Fortschritt für die Aggregation herangezogen.

In der Praxis wird davon ausgegangen, dass die Übertragung 1 der Trainingsfortschritte effizienter als die Übertragung der jeweiligen lokalen Daten ist, da diese üblicherweise weniger Bandbreite in Anspruch nehmen. Zudem offenbaren die Trainingsfortschritte i.d.R. keine direkten Informationen aus den lokalen Daten (z.B. die numerischen Gewichte oder Gradienten eines Neuronalen Netzes sind nicht menschenlesbar womit kaum Rückschlüsse über die Trainingsdaten möglich sind, Verschlüsselung würde dies zusätzlich erschweren).

Aktuell wird in FL die Aggregation 2 der lokalen Trainingsfortschritte zentral am Server getestet. Dabei wird dem Server ML eine Menge an Testdaten zur Verfügung gestellt, um die Qualität der Aggregation 2 zu bewerten. Der Test gilt als bestanden, wenn die Aggregation 2 bestimmte Performance-Kriterien anhand der Testdaten erfüllt (z.B. die Effizienz bei der Steuerung von Aktoren oder die Vorhersagegenauigkeit bei Objekterkennungsaufgaben). Somit kann sichergestellt werden, dass globale Performance-Kriterien, welche für alle Anwendungskontexte AKs gelten, geprüft und erfüllt werden können. Im Falle von Änderungen oder individuellen Performance-Bewertungen müssen die zentralen Testdaten und globalen Performance-Kriterien manuell durch Domänenexperten angepasst werden.

Fig. 2 zeigt ein grundlegendes Schema von Federated Learning (FL) nach der vorliegenden Erfindung. Die zu Fig. 1 eingeführten Bezugszeichen gelten für Fig. 2 entsprechend.

Jeder Anwendungskontext AK kann zusätzlich zu Fig. 1 individuell verschiedene Performance-Kriterien 4 zur Berechnung des numerischen Feedbacksignals 4, welches von dem Server empfangen wird, verwenden.

Es wird zusätzlich zu Fig. 1 ein adaptiver Testmechanismus, umgesetzt durch die Testeinheit, eingeführt, welcher individuell für jeden Anwendungskontext AK eine Testanpassung TA gemäß der lokalen Performance-Stabilität 4 durchführt indem spezifische Testmodelle TM, auch als Testfälle bezeichenbar, generiert werden, insbesondere eine gezielte Auswahl von Testdaten, um die Aggregation 2 gemäß dem Federated Learning zu testen.

Fig. 2 zeigt im Sinne der Erfindung eine generalisierte maschinelle Lernkomponente ML für mindestens zwei technische Systeme AK,
aufweisend:
- Eine erste Empfangseinheit, ausgebildet Performance-Bewertungen bezüglich einem ersten generalisierten maschinellen Lernmodel von den mindestens zwei technischen Systemen zu empfangen 4,
- eine Testanpassungseinheit TA, ausgebildet basierend auf den Performance-Bewertungen 4 mindestens zwei maschinelle Testmodelle TM zu erstellen, wobei den mindestens zwei technischen Systemen jeweils ein maschinelles Testmodell zugeordnet ist,
- eine Testeinheit, ausgebildet durch die mindestens zwei maschinellen Testmodelle TM jeweils ein Testergebnis bezüglich mindestens einem zweiten generalisierten Lernmodel zu erzeugen,
- eine Sendeeinheit, ausgebildet, jeweils in Abhängigkeit des Testergebnisses des jeweils zugeordneten maschinellen Testmodells TM, an die mindestens zwei technischen Systeme AK das zweite generalisierte maschinelle Lernmodel zu senden 3,
- eine zweite Empfangseinheit, ausgebildet mindestens einen lokalen Trainingsfortschritt von den mindestens zwei technischen Systemen AK zu empfangen 1, wobei der mindestens eine lokale Trainingsfortschritt 1 auf einem Training des ersten generalisierten maschinellen Lernmodel basiert und
- eine Aggregationseinheit, ausgebildet das mindestens eine zweite generalisierte maschinelle Lernmodel durch eine Aggregation 2 des mindestens einen lokalen Trainingsfortschritts 1 zu erstellen.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Generalisierte maschinelle Lernkomponente (ML) für mindestens zwei technische Systeme (AK),
aufweisend:
- Eine erste Empfangseinheit, ausgebildet Performance-Bewertungen bezüglich einem ersten generalisierten maschinellen Lernmodel von den mindestens zwei technischen Systemen zu empfangen (4),
- eine Testanpassungseinheit (TA), ausgebildet basierend auf den Performance-Bewertungen (4) mindestens zwei maschinelle Testmodelle (TM) zu erstellen, wobei den mindestens zwei technischen Systemen (AK) jeweils ein maschinelles Testmodell (TM) zugeordnet ist,
- eine Testeinheit, ausgebildet durch die mindestens zwei maschinellen Testmodelle (TM) jeweils ein Testergebnis bezüglich mindestens einem zweiten generalisierten Lernmodel zu erzeugen, und
- eine Sendeeinheit, ausgebildet, jeweils in Abhängigkeit des Testergebnisses des jeweils zugeordneten maschinellen Testmodells (TM), an die mindestens zwei technischen Systeme (AK) das zweite generalisierte maschinelle Lernmodel zu senden (3).

2. Generalisierte maschinelle Lernkomponente (ML) nach Anspruch 1,
außerdem aufweisend:
- eine zweite Empfangseinheit, ausgebildet mindestens einen lokalen Trainingsfortschritt (1) von den mindestens zwei technischen Systemen zu empfangen, wobei der mindestens eine lokale Trainingsfortschritt (1) auf einem Training des ersten generalisierten maschinellen Lernmodel basiert und
- eine Aggregationseinheit (2), ausgebildet das mindestens eine zweite generalisierte maschinelle Lernmodel durch eine Aggregation (2) des mindestens einen lokalen Trainingsfortschritts (1) zu erstellen.

3. Generalisierte maschinelle Lernkomponente (ML) nach Anspruch 2,
wobei der mindestens eine lokale Trainingsfortschritt (1) ausgebildet ist als:
- numerische Gewichte eines neuronalen Netzes und/oder
- Gradienten eines neuronalen Netzes.

4. Generalisierte maschinelle Lernkomponente (ML) nach Anspruch 2 oder 3,
wobei die zweite Empfangseinheit außerdem ausgebildet ist, den mindestens einen lokalen Trainingsfortschritte (1) von den mindestens zwei technischen Systemen (AK) zu vorgegebenen Zeitpunkten abzufragen.

5. Generalisierte maschinelle Lernkomponente (ML) nach einem der vorhergehenden Ansprüche 2 bis 4,
wobei die Aggregationseinheit (3) außerdem ausgebildet ist, das mindestens eine zweite generalisierte maschinelle Lernmodel durch ein Anpassen des ersten generalisierten maschinellen Lernmodels zu erstellen.

6. Generalisierte maschinelle Lernkomponente (ML) nach einem der vorhergehenden Ansprüche,
ausgebildet als:
- ein Server und/oder
- eine Cloud-Umgebung und/oder
- eine Recheneinheit.

7. Generalisierte maschinelle Lernkomponente (ML) nach einem der vorhergehenden Ansprüche,
wobei die mindestens zwei technischen Systeme (AK) ausgebildet sind als:
- autonome Produktionsanlagen und/oder
- Fertigungsanlagen und/oder
- Systeme zur medizinischen Diagnose und/oder
- industrielle Anlagen und/oder
- Energiekraftwerke und/oder
- Schienenverkehrsfahrzeuge und/oder
- Straßenverkehrsfahrzeuge und/oder
- automatische Steuerungen von Aktoren und/oder
- Objekterkennungseinheiten.

8. Generalisierte maschinelle Lernkomponente (ML) nach einem der vorhergehenden Ansprüche,
wobei die Testanpassungseinheit (TA) außerdem ausgebildet ist, die maschinelle Testmodelle (TM) zu erstellen durch:
- einen Optimierungsalgorithmus und/oder
- einen Reinforcement Learning Algorithmus und/oder
- einen Multi-armed Bandits (MAB) Algorithmus.

9. Generalisierte maschinelle Lernkomponente (ML) nach einem der vorhergehenden Ansprüche,
wobei die Testanpassungseinheit (TA) außerdem ausgebildet ist, basierend auf den Performance-Bewertungen die maschinellen Testmodelle (TM) zu erstellen, wodurch vorherige maschinelle Testmodelle angepasst werden.

10. Generalisierte maschinelle Lernkomponente (ML) nach einem der vorhergehenden Ansprüche,
wobei die erste Empfangseinheit außerdem ausgebildet ist, zweite Performance-Bewertungen (4) bezüglich des mindestens einem zweiten generalisierten maschinellen Lernmodels von den mindestens zwei technischen Systemen (AK) zu empfangen.

11. Generalisierte maschinelle Lernkomponente (ML) nach einem der vorhergehenden Ansprüche,
wobei die Performance-Bewertungen (4) keine Rückschlüsse auf Trainingsdaten der mindestens zwei technischen Systeme (AK) ermöglicht.

12. Generalisierte maschinelle Lernkomponente (ML) nach einem der Ansprüche 2 bis 11,
wobei der mindestens eine lokale Trainingsfortschritt (1) keine Rückschlüsse auf Trainingsdaten der mindestens zwei technischen Systeme (AK) ermöglicht.

13. Verfahren zum Senden (3) eines zweiten generalisierten maschinellen Lernmodels, mit den Schritten:
- Ein Empfangen (4) einer Performance-Bewertungen bezüglich einem ersten generalisierten maschinellen Lernmodel von mindestens zwei technischen Systemen (AK),
- ein Erstellen von mindestens zwei maschinellen Testmodellen (TM) basierend auf den Performance-Bewertungen, wobei den mindestens zwei technischen Systemen (AK) jeweils ein maschinelles Testmodell (TM) zugeordnet ist,
- ein Erzeugen von jeweils einem Testergebnis bezüglich mindestens einem zweiten generalisierten Lernmodel durch die mindestens zwei maschinellen Testmodelle (TM), und
- jeweils in Abhängigkeit des Testergebnisses des jeweils zugeordneten maschinellen Testmodells (TM): Ein Senden (3) des zweiten generalisierten maschinellen Lernmodel an die mindestens zwei technischen Systeme (AK).

14. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach Anspruch 13 ausgeführt werden, wenn das Computerprogramm auf der Recheneinheit ausgeführt wird.

15. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach Anspruch 13 ausgeführt werden, wenn das Computerprogramm auf der Recheneinheit ausgeführt wird.
